# EUROPÄISCHE PATENTSCHRIFT

(11) **EP 3 165 127 B1**
(45) Veröffentlichungstag und Bekanntmachung des Hinweises auf die Patenterteilung: **26.08.2020**
(21) Anmeldenummer: 16184357.8
(22) Anmeldetag: 16.08.2016
(51) Int. Cl.: A46B 9/02, A46B 13/02

(54) **ROTIERENDE REINIGUNGSBÜRSTE**
ROTATING CLEANING BRUSH
BROSSE DE NETTOYAGE ROTATIVE

(30) Priorität: 19.08.2015 DE 202015104378 U
(43) Veröffentlichungstag der Anmeldung: 10.05.2017
(73) Patentinhaber: Durchlaub, Thomas, 44789 Bochum (DE)
(72) Erfinder: Durchlaub, Thomas, 44789 Bochum (DE)
(74) Vertreter: Tanner, Lukas

(56) Entgegenhaltungen:
- DE-U1- 29 909 346
- GB-A- 1 055 052

## Beschreibung

### TECHNISCHES GEBIET DER ERFINDUNG

Die Erfindung betrifft eine pinselförmige Reinigungsbürste mit einem Anschlusszapfen zum Einspannen in das Spannfutter einer Maschine mit rotierender Antriebswelle und einem an seinem Ende abgerundeten kegel- oder zylinderförmigen Borstenträger mit über seiner Mantelfläche verteilten Löchern, in denen jeweils aus mehreren Borsten bestehende Borstenbündel befestigt sind.

### STAND DER TECHNIK

Eine Reinigungsbürste ist aus dem deutschen Gebrauchsmuster DE 29 909 346 U1 bekannt. Die Reinigungsbürste weist einen kegelförmigen Borstenträger auf und ist zum Einspannen in das Spannfutter einer Maschine mit rotierender Antriebswelle bestimmt. Die Reinigungsbürste ist geeignet, Hohlräume und Vertiefungen zu reinigen. Allerdings eignet sie sich nicht für die Reinigung größerer Flächen. DE 29 909 346 U1 beschreibt insbesondere einen rotierbaren Bürstenkegel für die Aufnahme in ein Bohrfutter.

### AUFGABE DER ERFINDUNG

Der Erfindung liegt die Aufgabe zugrunde, eine rotierende Reinigungsbürste bereitzustellen, die ihren Arbeitsbereich der zu reinigenden Oberfläche anpassen kann, ohne den Arbeitsvorgang zu unterbrechen.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Generell sind für das jeweilige Einsatzgebiet rotierender Reinigungsbürsten die Kombination des Außendurchmessers des Borstenträgers und der Länge der Borsten wichtig. Kleine Außendurchmesser des Borstenträgers kombiniert mit langen Borsten eignen sich für strukturierte, empfindliche Oberflächen. Bei dieser Kombination ist allerdings die Arbeitsbreite der Bürste gering. Große Außendurchmesser des Borstenträgers kombiniert mit kurzen Borsten eignen sich für robuste Oberflächen, die starke Verschmutzung aufweisen. Allerdings sind Bürsten in dieser Kombination nicht für strukturierte Oberflächen geeignet.

Die Erfindung betrifft eine Reinigungsbürste mit einem an einem ersten unteren Ende angeordneten Anschlusszapfen zum Einspannen in das Spannfutter einer Maschine mit rotierender Antriebswelle, z. B. einer Handbohrmaschine, für eine Rotation der Reinigungsbürste um ihre Längsachse. Die Reinigungsbürste weist einen an einem zweiten oberen Ende angeordneten abgerundeten Borstenträger mit über seine Mantelfläche verteilt angeordneten Löchern auf, in denen jeweils aus mehreren Borsten bestehende Borstenbündel befestigt sind. Die Borsten von mindestens zwei benachbart entlang der Längsachse angeordneten Borstenbündeln sind in Richtung auf die Längsachse derart umgebogen ausgebildet, dass die Borsten des näher zum Anschlusszapfen angeordneten ersten Borstenbündels zumindest teilweise die Borsten des weiter entfernt vom Anschlusszapfen angeordneten zweiten Borstenbündels überlappen.

Die Erfindung betrifft weiterhin eine Reinigungsbürste mit einem Anschlusszapfen zum Einspannen in das Spannfutter einer Maschine mit rotierender Antriebswelle und einem an seinem Ende abgerundeten kegel- oder zylinderförmigen Borstenträger mit über seiner Mantelfläche verteilten Löchern, in denen jeweils aus mehreren Borsten bestehende Borstenbündel befestigt sind. Die Borsten sind in Richtung auf die Achse des Borstenträgers umgebogen und überlappen zumindest teilweise die Borstenbündel aus höher liegenden Löchern.

Zur Lösung der Aufgabe schlägt die Erfindung vor, dass die Borsten in die Richtung auf die Längsachse des Borstenträgers umgebogen sind und zumindest teilweise die Borstenbündel aus höher liegenden Löchern überlappen. Die Enden der umgebogenen Borsten bilden bei jeweils gleicher Länge aufgrund der Abrundung des Borstenträgers eine abgerundete Spitze. Durch diese Form ist die Reinigung fein- und tiefstrukturierter Oberflächen möglich. Die oberen Borsten weichen bei steigendendem Druck zur Seite aus und die weiter unten liegenden Borsten bekommen Kontakt zur Oberfläche. Die Arbeitsbreite der Reinigungsbürste wird dadurch automatisch größer. Gleichzeitig wirken die unten liegenden Borsten einem weiteren Ausweichen der darüber liegenden Borsten stabilisierend entgegen. Auf diese Weise wird unkontrolliertes seitliches Auswandern der Reinigungsbürste erschwert. Des Weiteren kann der Arbeitsbereich über die Antriebsgeschwindigkeit der Welle angepasst werden. Die Borsten richten sich nämlich aufgrund der Fliehkraft bei steigender Drehzahl in die radiale Richtung des Borstenträgers aus, so dass der Arbeitsbereich einen größeren Umfang erhält.

Die neue Reinigungsbürste eignet sich besonders gut für die Reinigung von Kraftfahrzeugfelgen. Sie kann aber z. B. auch für die Reinigung von Teppichen und Sitzflächen benutzt werden. Sie eignet sich auch zur Entfernung von Tierhaaren von Sitzmöbeln, Kraftfahrzeugsitzen usw.

Für die Reinigung von Oberflächen, die eherfeine und tiefe Strukturen aufweisen, ist es förderlich, wenn alle Borsten die gleiche Länge aufweisen. Hierdurch bilden die freien Enden der Borsten den abgerundeten Bereich des zylinder- oder kegelförmigen Borstenträgers nach. Mit steigendem Druck passt sich die Reinigungsbürste der Oberfläche an.

Für die Reinigung von großen Oberflächen, die eher flache Strukturen aufweisen, ist es zweckmäßig, wenn die freien Enden der Borsten eine Ebene bilden. Dadurch haben alle Borsten direkt Kontakt zur Oberfläche. Die Borsten weichen bei steigendem Druck nach außen und der Arbeitsbereich wird somit größer.

Vorzugweise sind die Löcher ringförmig auf der Mantelfläche des Borstenträgers angeordnet. Durch diese Formation der Löcher stützen die unteren Borsten die darüberliegenden besonders gut und gleichmäßig.

Stattdessen können die Löcher auch z. B. spiralförmig auf der Mantelfläche des Borstenträgers angeordnet sein. Die freien Enden der Borsten bilden zusammen die kegel-spiralförmige Struktur des Borstenträgers und der Anordnung der Löcher nach. Hierdurch wird der Schmutz bei der Reinigung von Vertiefungen auf Oberflächen aus diesen nach oben und nach außen herausgefördert.

Eine Weiterbildung der Erfindung sieht vor, dass die Borsten aus mindestens zwei Kunststofffasern bestehen und die Borsten an ihren freien Enden in einzelne Fasern aufgespleißt sind. Die Reinigungsbürste wird hierdurch weicher. Dadurch lassen sich empfindliche Oberflächen reinigen, ohne diese zu beschädigen. Des Weiteren werden die freien Enden feiner und können sich somit besser der Oberfläche anpassen.

Die Borsten können aber auch stattdessen aus härterem Kunststoff oder Metalldraht bestehen, wenn weniger empfindliche Oberflächen gereinigt werden sollen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch einen Halbschnitt durch die Reinigungsbürste gemäß der Erfindung.
- **Fig. 2**: zeigt schematisch einen Halbschnitt durch die Reinigungsbürste gemäß der Erfindung in einer zweiten Ausführungsform.
- **Fig. 3**: zeigt schematisch eine Draufsicht auf den Borstenträger ohne Borsten der Fig. 1 und Fig. 2.
- **Fig. 4**: zeigt schematisch eine Draufsicht auf den Borstenträger ohne Borsten mit abweichend angeordneten Löchern.

### FIGURENBESCHREIBUNG

In den Zeichnungen ist eine neue Reinigungsbürste 10 mit einem abgerundeten zylindrischen Borstenträger 1 dargestellt. Abweichend von der dargestellten Ausführungsform kann der Borstenträger 1 auch die Form eines abgerundeten Kegels haben. An der Grundfläche des Borstenträgers 1 ist ein entlang der Achse 6 des Borstenträgers 1 verlaufender Anschlusszapfen 2 befestigt. Der Anschlusszapfen 2 ist zum Einspannen in das Spannfutter einer Maschine mit rotierender Antriebswelle, insbesondere einer Handbohrmaschine, geeignet. Auf der Mantelfläche des Borstenträgers 1 sind Löcher 3 eingelassen.

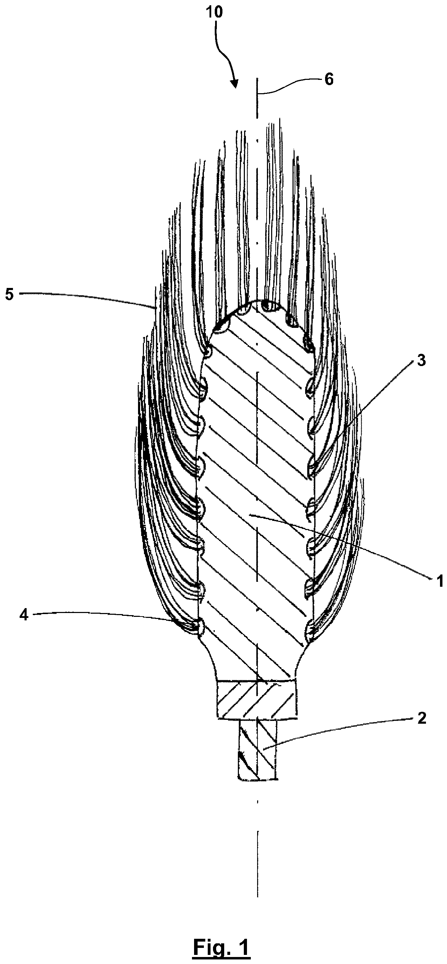

In **Fig. 1** ist erkennbar, dass in den Löchern 3 Borstenbündel 4 befestigt sind. Die Borstenbündel 4 bestehen jeweils aus mehreren Borsten 5. Die Borsten 5 sind in die Richtung auf die Achse 6 des Borstenträgers 1 umgebogen. Die Borsten 5 weisen jeweils die gleiche Länge auf. Die niedriger auf dem Borstenträger 1 befestigten Borsten 5 überlappen dabei die höher auf dem Borstenträger 1 befestigten Borsten 5. Durch die pinselförmige Struktur kann die Reinigungsbürste 10 feinstrukturierte Oberflächen bearbeiten. Wird nun der Druck auf die Reinigungsbürste 10 erhöht, weichen die oberen Borsten 5 zur Seite aus und die weiter untenliegenden Borsten 5 kommen zusätzlich in Kontakt mit der zu reinigenden Oberfläche. Die Arbeitsbreite der Reinigungsbürste 10 wird größer. Daher eignet sich die Reinigungsbürste 10 besonders für die Reinigung von Objekten, die unterschiedlich strukturierte Oberflächen aufweisen, wie z. B. Radfelgen oder Gartenmöbel.

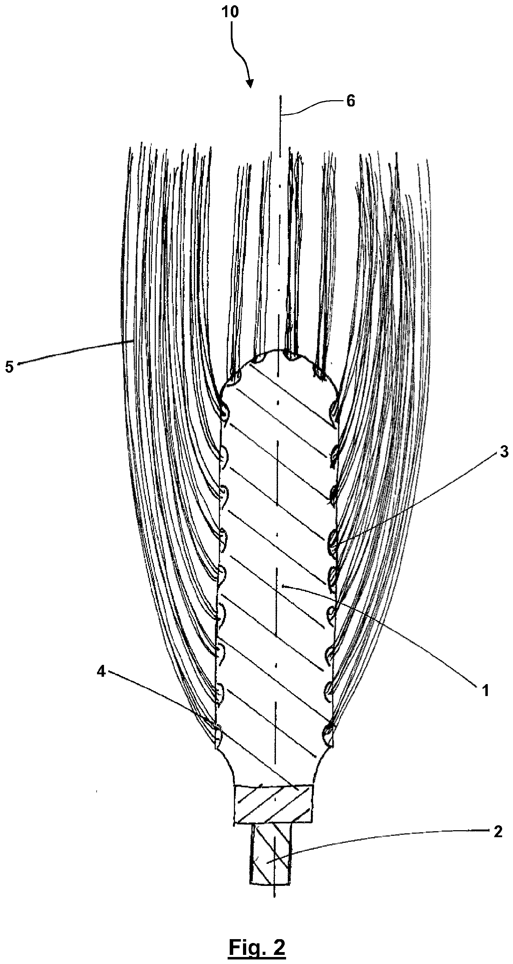

Die in der **Fig. 2** dargestellte Ausführungsform der Reinigungsbürste 10 unterscheidet sich von der in Fig. 1 durch die Länge der Borsten 5. Die freien Enden der Borsten 5 bilden hier eine Ebene. Alle Borsten 5 kommen direkt mit der zu reinigenden Oberfläche in Kontakt. Hierdurch ist die Arbeitsbreite der Reinigungsbürste 10 direkt groß. Diese Ausführungsform bietet sich für eher großflächige als feinstrukturierte Oberflächen an.

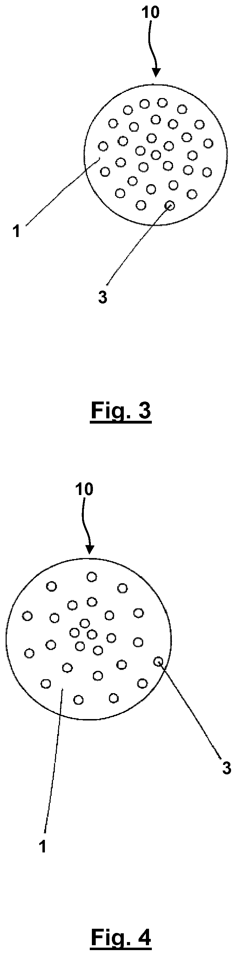

Die **Fig. 3** zeigt den Borstenträger 1 mit Löchern 3, die ringförmig auf der Mantelfläche des Borstenträgers 1 angeordnet sind. Auf diese Weise bündeln die auf einer Höhe liegenden Borstenbündel 4 ihre stützende Wirkung für die auf der nächst höheren Ringlinie befestigten Borstenbündel 4.

Die in **Fig. 4** dargestellte Ausführungsform der Reinigungsbürste 10 unterscheidet sich von der in Fig. 3 dadurch, dass hier die Löcher 3 spiralförmig auf der Mantelfläche des Borstenträgers 1 angeordnet sind. Die freien Enden der Borsten 5 bilden die kegel-spiralförmige Struktur des Borstenträgers 1 und der Formation der Löcher 3 nach. Hierdurch wird der Schmutz nach oben und nach außen herausgefördert.

### BEZUGSZEICHENLISTE

- 1: Borstenträger
- 2: Anschlusszapfen
- 3: Löcher
- 4: Borstenbündel
- 5: Borste
- 6: Längsachse
- 10: Reinigungsbürste

## Patentansprüche

1. Reinigungsbürste (10), mit
einem an einem ersten unteren Ende angeordneten Anschlusszapfen (2) zum Einspannen in das Spannfutter einer Maschine mit rotierender Antriebswelle für eine Rotation der Reinigungsbürste (10) um ihre Längsachse (6), und
einem an einem zweiten oberen Ende angeordneten abgerundeten Borstenträger (1) mit über seine Mantelfläche verteilt angeordneten Löchern (3), in denen jeweils aus mehreren Borsten (5) bestehende Borstenbündel (4) befestigt sind,
**dadurch gekennzeichnet, dass** die Borsten (5) von mindestens zwei benachbart entlang der Längsachse (6) angeordneten Borstenbündeln (4) in Richtung auf die Längsachse (6) derart umgebogen ausgebildet sind, dass die Borsten (5) des näher zum Anschlusszapfen (2) angeordneten ersten Borstenbündels (4) zumindest teilweise die Borsten (5) des weiter entfernt vom Anschlusszapfen (2) angeordneten zweiten Borstenbündels (4) überlappen.

2. Reinigungsbürste (10) nach Anspruch 1, **dadurch gekennzeichnet, dass** der Borstenträger (1) kegelförmig oder zylinderförmig ausgebildet ist.

3. Reinigungsbürste (10) nach Anspruch 1 oder 2, **dadurch gekennzeichnet, dass** die Borsten (5) jeweils die gleiche Länge aufweisen.

4. Reinigungsbürste (10) nach Anspruch 1 oder 2, **dadurch gekennzeichnet, dass** die freien Enden der Borsten (5) eine Ebene bilden.

5. Reinigungsbürste (10) nach Anspruch 3 oder 4, **dadurch gekennzeichnet, dass** die Löcher (3) ringförmig auf der Mantelfläche des Borstenträgers (1) angeordnet sind.

6. Reinigungsbürste (10) nach Anspruch 3 oder 4, **dadurch gekennzeichnet, dass** die Löcher (3) spiralförmig auf der Mantelfläche des Borstenträgers (1) angeordnet sind.

7. Reinigungsbürste (10) nach Anspruch 5 oder 6, **dadurch gekennzeichnet, dass** die einzelnen Borsten (5) aus mindestens zwei Kunststofffasern bestehen und die Borsten (5) an ihren freien Enden in einzelne Fasern aufgespleißt sind.

8. Reinigungsbürste (10) nach mindestens einem der vorhergehenden Ansprüche, **dadurch gekennzeichnet, dass** die Borsten (5) kurvenförmig umgebogen ausgebildet ist.

9. Reinigungsbürste (10) nach mindestens einem der vorhergehenden Ansprüche, **dadurch gekennzeichnet, dass** die Borsten (5) derart umgebogen ausgebildet sind, dass die freien Enden der Borsten (5) des näher zum Anschlusszapfen (2) angeordneten ersten Borstenbündels (4) das Loch (3) überlappen, in dem die Borsten (5) des benachbart entlang der Längsachse (6) und weiter entfernt vom Anschlusszapfen (2) angeordneten zweiten Borstenbündels (4) befestigt sind.

10. Reinigungsbürste (10) nach Anspruch 9, **dadurch gekennzeichnet, dass** die Borsten (5) derart umgebogen ausgebildet sind, dass die freien Enden der Borsten (5) des näher zum Anschlusszapfen (2) angeordneten ersten Borstenbündels (4) auch das nächste entlang der Längsachse (6) und weiter entfernt vom Anschlusszapfen (2) angeordnete Loch (3) überlappen.

11. Reinigungsbürste (10) nach Anspruch 9, **dadurch gekennzeichnet, dass** die Borsten (5) derart umgebogen ausgebildet sind, dass die freien Enden der Borsten (5) des näher zum Anschlusszapfen (2) angeordneten ersten Borstenbündels (4) auch die nächsten zwei entlang der Längsachse (6) und weiter entfernt vom Anschlusszapfen (2) angeordneten Löcher (3) überlappen.

12. Verfahren zum Herstellen einer Reinigungsbürste (10) nach mindestens einem der vorhergehenden Ansprüche, mit den Schritten:
Einbringen einer Ausgangsversion der Reinigungsbürste (10) in einen Rohrabschnitt, wobei die Reinigungsbürste (10) einen an einem ersten unteren Ende angeordneten Anschlusszapfen (2) zum Einspannen in das Spannfutter einer Maschine mit rotierender Antriebswelle für eine Rotation der Reinigungsbürste (10) um ihre Längsachse (6) und einen an einem zweiten oberen Ende angeordneten abgerundeten Borstenträger (1) mit über seine Mantelfläche verteilt angeordneten Löchern (3) aufweist, in denen jeweils aus mehreren Borsten (5) bestehende Borstenbündel (4) befestigt sind, wobei die Borsten (5) der Ausgangsversion der Reinigungsbürste (10) außerhalb des Rohrabschnitt so ausgebildet und angeordnet sind, dass ihre freien Enden eine Halbkugel bilden und in dem Rohrabschnitt so umgebogen werden, dass sie einen Zylinder bilden,
Erwärmen des Rohrabschnitts derart, dass die Borsten (5) eine Temperatur erreichen, die mindestens der Schmelztemperatur des Materials der Borsten (5) entspricht,
Abkühlen des Rohrabschnitts derart, dass die Temperatur der Borsten (5) unter die Schmelztemperatur des Materials der Borsten (5) fällt, und
Entfernen der Endversion der Reinigungsbürste (10) aus dem Rohrabschnitt.

13. Verfahren nach Anspruch 12, **dadurch gekennzeichnet, dass** die Borsten (5) so in dem Rohrabschnitt umgeformt werden, dass die Borsten (5) von benachbart entlang der Längsachse (6) angeordneten Borstenbündeln (4) in Richtung auf die Längsachse (6) derart umgebogen ausgebildet sind, dass die freien Enden der Borsten (5) des näher zum Anschlusszapfen (2) angeordneten ersten Borstenbündels (4) zumindest das Loch (3) überlappen, in dem die Borsten (5) des weiter entfernt vom Anschlusszapfen (2) angeordneten zweiten Borstenbündels (4) befestigt sind.

14. Verfahren nach Anspruch 12 oder 13, **dadurch gekennzeichnet, dass** das Erwärmen des Rohrabschnitts in einem warmen Wasserbad, insbesondere mit einer Wassertemperatur von zwischen 60 °C und 90 °C, insbesondere zwischen 75 °C und 85 °C, erfolgt, und
das Abkühlen des Rohrabschnitts in einem kalten Wasserbad, insbesondere mit einer Wassertemperatur von zwischen 5 °C und 25 °C, insbesondere zwischen 8 °C und 15 °C, erfolgt.

15. Verfahren nach Anspruch 12 oder 13, **dadurch gekennzeichnet, dass** das Erwärmen des Rohrabschnitts mit einem Heißluftgebläse erfolgt.

## Claims

1. Cleaning brush (10), with
a connecting pin (2) arranged at a first lower end for clamping in the chuck of a machine having a rotating drive shaft for rotation of the cleaning brush (10) about its longitudinal axis (6), and
a rounded bristle carrier (1) arranged at a second upper end and having openings (3) distributed over its shell surface, in each of which are fixed bundles of bristles (4) consisting of a plurality of bristles (5),
**characterized In that** the bristles (5) of at least two bristle bundles (4) arranged adjacent along the longitudinal axis (6) are bent over in the direction of the longitudinal axis (6) in such a way that the bristles (5) of the first bristle bundle (4) arranged closer to the connecting pin (2) at least partially overlap the bristles (5) of the second bristle bundle (4) arranged further away from the connecting pin (2).

2. Cleaning brush (10) according to claim 1, **characterized in that** the bristle carrier (1) is conical or cylindrical.

3. Cleaning brush (10) according to claim 1 or 2, **characterized in that** the bristles (5) are each of the same length.

4. Cleaning brush (10) according to claim 1 or 2, **characterized in that** the free ends of the bristles (5) are located in one common plane.

5. Cleaning brush (10) according to claim 3 or 4, **characterized in that** the openings (3) are arranged in an annular configuration on the shell surface of the bristle carrier (1).

6. Cleaning brush (10) according to claim 3 or 4, **characterized in that** the openings (3) are arranged in an helical configuration on the shell surface of the bristle carrier (1).

7. Cleaning brush (10) according to claim 5 or 6, **characterized in that** the individual bristles (5) consist of at least two plastic fibers, and the bristles (5) are spliced into individual fibers at their free ends.

8. Cleaning brush (10) according to at least one of the preceding claims, **characterized in that** the bristles (5) are bent over in a curved manner.

9. Cleaning brush (10) according to at least one of the preceding claims, **characterized in that** the bristles (5) are bent over in such a way that the free ends of the bristles (5) of the first bundle of bristles (4) arranged closer to the connecting pin (2) overlap the opening (3) in which the bristles (5) of the second bundle of bristles (4) arranged adjacent along the longitudinal axis (6) and further away from the connecting pin (2) are fixed,

10. Cleaning brush (10) according to claim 9, **characterized in that** the bristles (5) are bent over in such a way that the free ends of the bristles (5) of the first bundle of bristles (4) arranged closer to the connection pin (2) also overlap the next opening (3) arranged along the longitudinal axis (6) and arranged further away from the connection pin (2).

11. Cleaning brush (10) according to claim 9, **characterized in that** the bristles (5) are bent over in such a way that the free ends of the bristles (5) of the first bundle of bristles (4) arranged closer to the connecting pin (2) also overlap the next two openings (3) arranged along the longitudinal axis (6) and arranged further away from the connecting pin (2),

12. Method for manufacturing a cleaning brush (10) according to at least one of the preceding claims, comprising the steps of:
inserting an initial version of the cleaning brush (10) into a pipe section, the cleaning brush (10) having a connecting pin (2) arranged at a first lower end for being clamped in the chuck of a machine having a rotating drive shaft for rotation of the cleaning brush (10) about its longitudinal axis (6), and
the cleaning brush (10) having a rounded bristle carrier (1) arranged at a second upper end with openings (3) distributed over its shell surface, in which bundles of bristles (4) each consisting of a plurality of bristles (5) are fixed, wherein the bristles (5) of the initial version of the cleaning brush (10) being formed and arranged outside the tube section in such a way that their free ends form a hemisphere and are bent over in the tube section so as to form a cylinder,
heating of the tube section in such a way that the bristles (5) reach a temperature at least equal to the melting temperature of the material of the bristles (5),
cooling the tube section in such a way that the temperature of the bristles (5) falls below the melting temperature of the material of the bristles (5), and
removing the final version of the cleaning brush (10) from the pipe section.

13. Method according to claim 12, **characterized in that** the bristles (5) are shaped in the tube section in such a way that the bristles (5) of bristle bundles (4) being arranged adjacent along the longitudinal axis (6) are bent over in the direction of the longitudinal axis (6) such that the free ends of the bristles (5) of the first bristle bundle (4) arranged closer to the connecting pin (2) overlap at least the opening (3) in which the bristles (5) of the second bristle bundle (4) arranged further away from the connecting pin (2) are fixed.

14. Method according to claim 12 or 13, **characterized in that** the heating of the tube section is carried out in a hot water bath, in particular with a water temperature of between 60°C and 90°C, in particular between 75°C and 85°C, and
the cooling of the pipe section is carried out in a cold water bath, in particular with a water temperature of between 5 °C and 25 °C, especially between 8 °C and 15 °C.

15. Method according to claim 12 or 13, **characterized in that** the heating of the pipe section is carried out with a hot air blower.

## Revendications

1. Brosse de nettoyage (10), avec
une raccord de connexion (2) disposée à une première extrémité inférieure pour le serrage dans le mandrin d'une machine avec un arbre d'entraînement rotatif pour la rotation de la brosse de nettoyage (10) autour de son axe longitudinal (6), et
un support de poils arrondi (1) disposé à une deuxième extrémité supérieure et présentant des trous (3) répartis sur sa surface extérieure, dans chacun desquels sont fixés des faisceaux de poils (4) constitués d'une pluralité de poils (5),
**caractérisée en ce que** les poils (5) d'au moins deux faisceaux de poils (4) disposés de manière adjacente le long de l'axe longitudinal (6) sont repliés dans la direction de l'axe longitudinal (6) de telle sorte que les poils (5) du premier faisceau de poils (4) disposé le plus près du raccord de connexion (2) chevauchent au moins partiellement les poils (5) du deuxième faisceau de poils (4) disposé plus loin du raccord de connexion (2).

2. Brosse de nettoyage (10) selon la revendication 1, **caractérisée en ce que** le support de poils (1) est conique ou cylindrique.

3. Brosse de nettoyage (10) selon la revendication 1 ou 2, **caractérisée en ce que** les poils (5) sont chacun de la même longueur.

4. Brosse de nettoyage (10) selon la revendication 1 ou 2, **caractérisée en ce que** les extrémités libres des poils (5) forment un plan.

5. Brosse de nettoyage (10) selon la revendication 3 ou 4, **caractérisée en ce que** les trous (3) sont disposés de manière annulaire sur la surface extérieure du support de poils (1).

6. Brosse de nettoyage (10) selon la revendication 3 ou 4, **caractérisée en ce que** les trous (3) sont disposés en spirale sur la surface extérieure du support de poils (1).

7. Brosse de nettoyage (10) selon la revendication 5 ou 6, **caractérisée en ce que** les poils individuels (5) sont constitués d'au moins deux fibres plastiques et les poils (5) sont épissés en fibres individuelles à leurs extrémités libres.

8. Brosse de nettoyage (10) selon au moins une des revendications précédentes, **caractérisée en ce que** les poils (5) sont repliés d'une manière courbée.

9. Brosse de nettoyage (10) selon au moins une des revendications précédentes, **caractérisée en ce que** les poils (5) sont repliés de telle manière que les extrémités libres des poils (5) du premier faisceau de poils (4) disposé le plus près du raccord de connexion (2) recouvrent le trou (3) dans lequel sont fixés les poils (5) du deuxième faisceau de poils (4) disposé au voisinage de l'axe longitudinal (6) et plus éloigné du raccord de connexion (2).

10. Brosse de nettoyage (10) selon la revendication 9, **caractérisée en ce que** les poils (5) sont repliés de telle manière que les extrémités libres des poils (5) du premier faisceau de poils (4) disposé le plus près du raccord de connexion (2) recouvrent également le trou (3) suivant disposé le long de l'axe longitudinal (6) et plus éloigné du raccord de connexion (2).

11. Brosse de nettoyage (10) selon la revendication 9, **caractérisée en ce que** les poils (5) sont repliés de telle manière que les extrémités libres des poils (5) du premier faisceau de poils (4) disposé le plus près du raccord de connexion (2) recouvrent également les deux trous (3) suivants disposés le long de l'axe longitudinal (6) et plus éloignés du raccord de connexion (2).

12. Procédé de fabrication d'une brosse de nettoyage (10) selon au moins une des revendications précédentes, comprenant les étapes suivantes:
insertion d'une première version de la brosse de nettoyage (10) dans une section de tube, la brosse de nettoyage (10) présentant un raccord de connexion (2) disposé à une première extrémité inférieure pour le serrage dans le mandrin d'une machine avec un arbre d'entraînement rotatif pour la rotation de la brosse de nettoyage (10) autour de son axe longitudinal (6) et la brosse de nettoyage (10) présentant un support de poils (1) arrondi disposé à une deuxième extrémité supérieure avec des trous (3) répartis sur sa surface extérieure, dans lesquels sont fixés des faisceaux de poils (4) constitués chacun de plusieurs poils (5), les poils (5) de la version initiale de la brosse de nettoyage (10) étant formés et disposés à l'extérieur de la section tubulaire de telle sorte que leurs extrémités libres forment un hémisphère et sont repliés dans la section tubulaire de manière à former un cylindre,
chauffage de la section du tube de manière à ce que les poils (5) atteignent une température au moins égale à la température de fusion du matériau des poils (5),
refroidissement de la section du tube de telle sorte que la température des poils (5) tombe en dessous de la température de fusion du matériau des poils (5), et
retirer la version finale de la brosse de nettoyage (10) de la section de tuyau.

13. Procédé selon la revendication 12, **caractérisé en ce que** les poils (5) sont formés dans la section de tube de telle sorte que les poils (5) de faisceaux de poils (4) disposés de manière adjacente le long de l'axe longitudinal (6) sont repliés dans la direction de l'axe longitudinal (6) de sorte que les extrémités libres des poils (5) du premier faisceau de poils (4) disposé le plus près du raccord de connexion (2) recouvrent au moins le trou (3) dans lequel sont fixés les poils (5) du deuxième faisceau de poils (4) disposé le plus loin du raccord de connexion (2).

14. Procédé selon la revendication 12 ou 13, **caractérisé en ce que** le chauffage de la section de tube est effectué dans un bain d'eau chaude, en particulier avec une température d'eau comprise entre 60 °C et 90 °C, notamment entre 75 °C et 85 °C, et
**en ce que** le refroidissement de la section de tuyau est effectué dans un bain d'eau froide, en particulier avec une température de l'eau comprise entre 5 °C et 25 °C, notamment entre 8 °C et 15 °C.

15. Procédé selon la revendication 12 ou 13, **caractérisée en ce que** le chauffage de la section de tuyau est effectué à l'aide d'une soufflerie d'air chaud.
